# EUROPEAN PATENT APPLICATION

(11) **EP 3 771 197 A1**
(43) Date of publication of application: **27.01.2021**
(21) Application number: 20177209.2
(22) Date of filing: 28.05.2020
(51) Int. Cl.: H04N 5/225, H04M 1/02

(54) **CAMERA BRACKET, CAMERA ASSEMBLY, AND TERMINAL**

(30) Priority: 23.07.2019 CN 201921250609 U
(71) Applicant: Realme Chongqing Mobile Telecommunications Corp., Ltd, Chongqing 401122 (CN)
(72) Inventor: YAO, Kun, Chongqing 401122 (CN)
(74) Representative: Manitz Finsterwald Patent- und Rechtsanwaltspartnerschaft mbB

(57) **Abstract**

A camera bracket, a camera assembly, and a terminal are provided. The camera bracket includes a bracket body portion, where the bracket body portion includes at least four mounting portions. At least one of the mounting portions is provided with a platform portion on its sidewall. The platform portion is perpendicular to its corresponding sidewall, and the platform portion is stepped with the corresponding sidewall. A plurality of camera modules are arranged on one bracket body portion which may be used to arrange a plurality of camera modules at the same time.

## Description

### TECHNICAL FIELD

The present disclosure relates to the field of electronic technology, and more particular to a camera bracket, a camera assembly, and a terminal.

### BACKGROUND

With the development of communication technologies, electronic devices or terminals such as smart phones have become more and more popular. In the daily use of the electronic devices, camera functions of the electronic devices become more and more important, with more and more requirements for photographing effects. In order to achieve better photographing effects, the number and types of cameras have also increased. Complex limiting structures are sometimes required to limit a number of cameras arranged in the electronic device.

### SUMMARY

Implementations of the present disclosure provide a camera bracket, a camera assembly, and a terminal, which can conveniently arrange a plurality of cameras without requiring complex limiting structures in the terminal.

An implementation of the present disclosure provides a camera bracket which includes a bracket body portion. The bracket body portion includes at least four mounting portions, each of the mounting portions is provided with a mounting hole. Each of the mounting portions includes a sidewall for defining the mounting hole. At least one of the mounting portions is provided with a platform portion on its sidewall. The platform portion vertically extends from its corresponding sidewall, and is stepped with its corresponding sidewall.

An implementation of the present disclosure further provides a camera assembly, which includes the camera bracket described above and at least four camera modules corresponding to the at least four mounting portions of the camera bracket, where each camera module is fixedly arranged on the corresponding mounting portion.

An implementation of the present disclosure further provides a terminal, which includes a housing and the camera assembly described above. The camera assembly is arranged in the housing.

In the implementations of the present disclosure, the camera bracket includes the bracket body portion, and the bracket body portion includes at least four mounting portions. Each mounting portion is provided with a mounting hole. Each of the mounting portions includes the sidewall defining the mounting hole. At least one of the mounting portions is provided with a platform portion on its sidewall. The platform portion vertically extends from its corresponding sidewall, and is stepped with its corresponding sidewall. The plurality of camera modules are arranged on one bracket body portion. The bracket body is able to well limit the plurality of camera modules. Each mounting portion is able to support and fix the camera module very well through its corresponding platform portion and its corresponding sidewall, so a complex structure is no longer required in the terminal to limit the positions of the plurality of independent camera modules respectively.

### BRIEF DESCRIPTION OF THE DRAWINGS

To describe the technical solutions of the implementations of the present disclosure more clearly, the accompanying drawings required for describing the implementations are briefly introduced below. Clearly, the accompanying drawings described below are merely some implementations of the present disclosure. For those skilled in the art, other drawings can also be obtained from the drawings without paying creative work.
FIG. 1 is a schematic diagram of a first structure of a camera bracket according to an implementation of the present disclosure.
FIG. 2 is a schematic diagram of a second structure of the camera bracket according to an implementation of the present disclosure.
FIG. 3 is a schematic structural diagram of the camera bracket of FIG. 1 viewed from another perspective according to an implementation of the present disclosure.
FIG. 4 is a schematic structural diagram of the camera bracket of FIG. 2 viewed from another perspective according to an implementation of the present disclosure.
FIG. 5 is a schematic structural diagram of a camera assembly according to an implementation of the present disclosure.
FIG. 6 is a schematic structural diagram of the camera assembly of FIG. 5 viewed from another perspective according to an implementation of the present disclosure.
FIG. 7 is a schematic diagram of a first structure of a terminal according to an implementation of the present disclosure.
FIG. 8 is a schematic diagram of a second structure of the terminal according to an implementation of the present disclosure.
FIG. 9 is a schematic diagram of a third structure of the terminal according to an implementation of the present disclosure.

### DETAILED DESCRIPTION

The technical solutions in the implementations of the present disclosure will be clearly and completely described below with reference to the accompanying drawings in the implementations of the present disclosure. Clearly, the described implementations are only a part of the implementations of the present disclosure, but not all the implementations. Based on the implementations in the present disclosure, all other implementations obtained by those skilled in the art without paying any creative labor are within the protection scope of the present disclosure.

The implementations of the present disclosure provide a camera bracket, a camera assembly and a terminal. The camera bracket is applied to the camera assembly, and the camera assembly is applied to the terminal. The terminal may be a smart phone, a tablet, or other devices, or may be a game device, an AR (augmented reality) device, a data storage device, an audio playback device, a video playback device, a wearable device, etc. The wearable device may be a smart bracelet, smart glasses, etc.

In an implementation, the camera bracket includes a bracket body portion which includes at least four mounting portions. Each of the mounting portions is provided with a mounting hole, and each of the mounting portions includes a sidewall defining the mounting hole. At least one of the mounting portions is provided with a platform portion on its sidewall, where the platform portion vertically extends from its corresponding sidewall, and is stepped with its corresponding sidewall.

In an implementation, the camera assembly includes the above camera bracket and at least four camera modules corresponding to the at least four mounting portions of the camera bracket, where each of the camera modules is fixedly arranged on a corresponding mounting portion.

In an implementation, the terminal includes a housing and the above camera assembly, where the camera assembly is arranged in the housing.

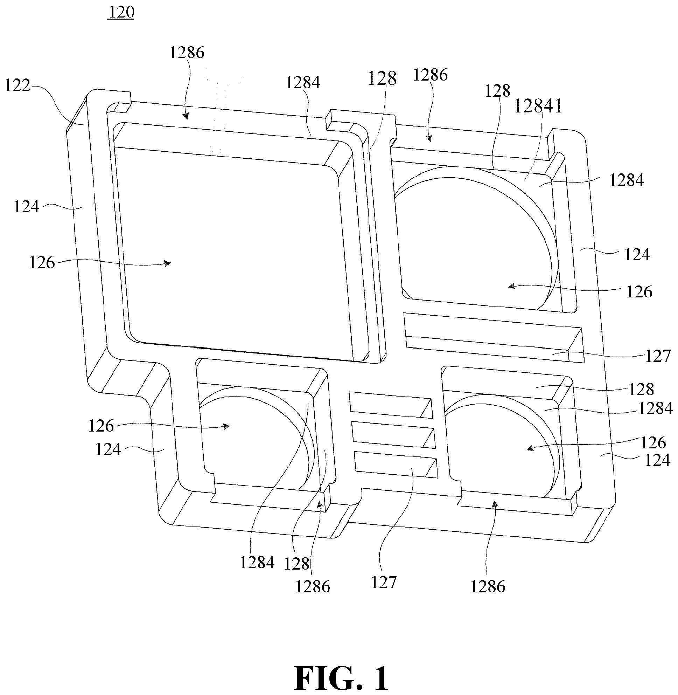

Referring to FIG. 1, FIG. 1 is a schematic diagram of a first structure of a camera bracket according to an implementation of the present disclosure. The camera bracket 120 includes a bracket body portion 122. The bracket body portion 122 includes at least four mounting portions 124. Each of the mounting portions 124 is provided with a mounting hole 126. Each of the mounting portions 124 includes a sidewall 128 defining the mounting hole 126. At least one of the mounting portions 124 is provided with a platform portion 1284 on its sidewall 128. The platform portion 1284a corresponding sidewall 128The platform portion 1284 is stepped with its corresponding sidewall 128. In the implementation, the platform portion 1284 vertically extends from its corresponding sidewall 128.

The camera bracket 120 is able to arrange a plurality of camera modules thereon at the same time, and the bracket body portion 122 is able to well limit positions of the plurality of camera modules. Each mounting portion 124 is able to support and fix the camera module very well through its corresponding platform portion 1284 and its corresponding sidewall 128, so a complex structure is no longer required in a terminal 100 to limit the positions of the plurality of independent camera modules respectively.

It should be noted that, the platform portions 1284 may be provided for all the mounting portions 124, and the platform portion 1284 may be provided for some of the mounting portions 124. That is, the bracket body portion 122 may be provided with the platform portions 1284 on one or more of the mounting portions 124 as required, with any one of the platform portions 1284 being stepped with a corresponding sidewall 128.

The at least four mounting portions 124 may include four mounting portions 124, and the four mounting portions 124 may be arranged in a matrix, such as a " 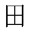 " shape. For example, the four mounting portions 124 are arranged in two rows, with two mounting portions 124 arranged in each row. It should be noted that when the four mounting portions 124 are arranged in the " 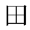 " shape, the total length and the total width of the bracket body portion 122 may be the same or different, and the sizes of the four mounting portions 124 may also be the same or different.

In other implementations, the at least four mounting portions 124 may include six mounting portions 124, and the six mounting portions 124 may be arranged in two rows, with three mounting portions 124 arranged in each row; or, the six mounting portions 124 may be arranged in two columns, with three mounting portions 124 arranged in each column.

The number of the at least four mounting portions 124 may also be a singular. For example, the at least four mounting portions 124 may include five mounting portions 124, and the five mounting portions 124 are arranged in a matrix. The five mounting portions 124 are arranged in two rows: one row is provided with two mounting portions 124, and the other row is provided with three mounting portions 124. It can also be understood that the at least four mounting portions 124 may be arranged in a similar matrix manner.

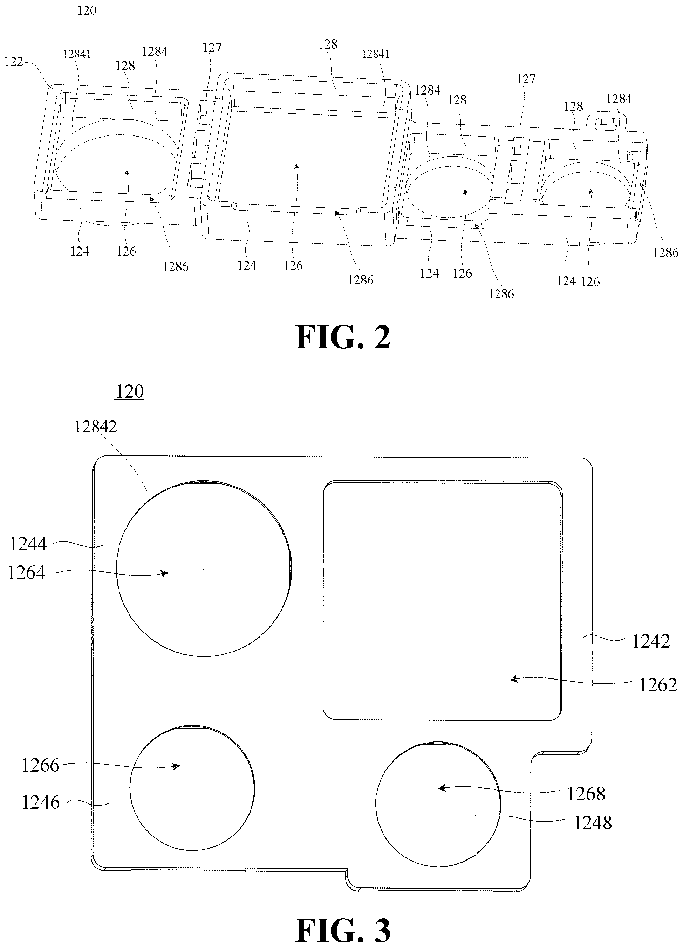

The at least four the mounting portions 124 may also be arranged in other manners. Referring to FIG. 2, FIG. 2 is a schematic diagram of a second structure of the camera bracket according to an implementation of the present disclosure. As illustrated in FIG. 2, the at least four mounting portions 124 may also be arranged linearly. That is, the at least four mounting portions 124 may be arranged in a row or a column.

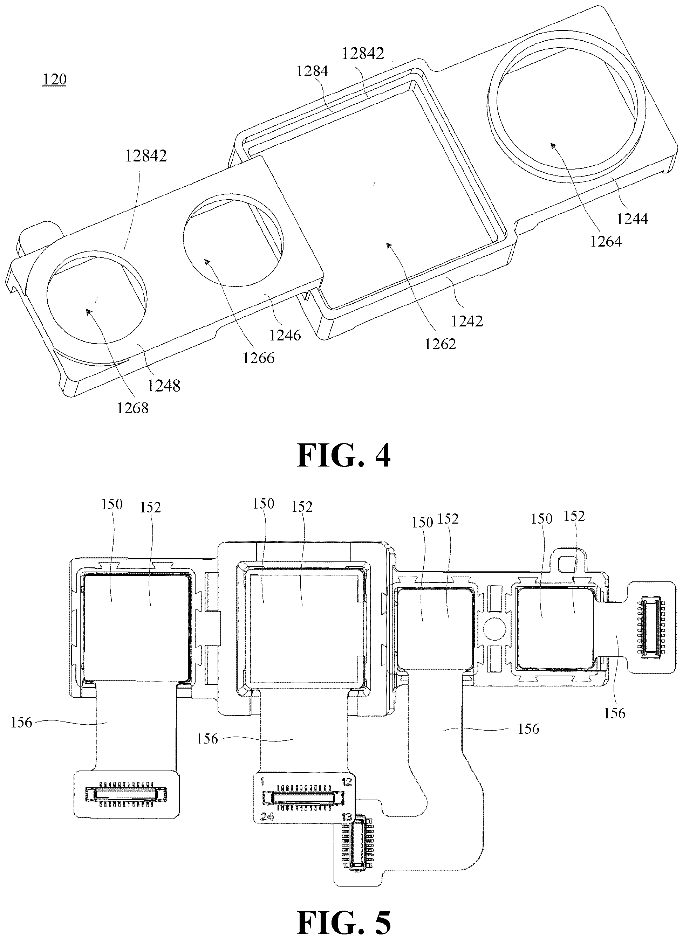

Referring to FIG. 3 and FIG. 4, FIG. 3 is a schematic structural diagram of the camera bracket of FIG. 1 viewed from another perspective according to an implementation of the present disclosure, and FIG. 4 is a schematic structural diagram of the camera bracket of FIG. 2 viewed from another perspective according to an implementation of the present disclosure. Referring to FIGS. 1-4, the at least four the mounting portions 124 may include a first mounting portion 1242 which is provided with a first mounting hole 1262. A size of the first mounting portion 1242 is larger than that of the other mounting portions 124, and a size of the first mounting hole 1262 of the first mounting portion 1242 is larger than that of the mounting holes 126 of the other mounting portions 124.

The first mounting portion 1242 may be configured to arrange a main camera module. The main camera module is the most important camera module for taking pictures. For example, the camera bracket 120 may be configured to arrange a main camera, a wide-angle camera, a macro camera, and a virtual camera. The first mounting portion 1242 is configured to arrange the main camera, and the other mounting portions 124 are configured to arrange the wide-angle camera, the macro camera, and the virtual camera. Pixel value of the main camera is more than that of the other cameras. For example, the pixel value of the main camera module is about 48 million, and the pixel value of the other camera modules is 18 million or other values. In addition, the main camera module may include a lens motor that drives a lens of the main camera module to move, so as to realize functions of the main camera module such as autofocus.

The at least four mounting portions 124 may further include a second mounting portion 1244, a third mounting portion 1246, and a fourth mounting portion 1248. The second mounting portion 1244 is provided with a second mounting hole 1264, the third mounting portion 1246 is provided with a third mounting hole 1266, and the fourth mounting portion 1248 is provided with a fourth mounting hole 1268. The size of the first mounting portion 1242 is larger than that of the second mounting portion 1244, and a size of the second mounting portion 1244 is larger than that of the third mounting portion 1246 and the fourth mounting portion 1248. A size of the second mounting hole 1266 is larger than that of the third mounting hole 1266 and the fourth mounting hole 1268.

The camera bracket 120 is able to arrange camera modules having various sizes and various functions. For example, the camera bracket 120 may be configured to arrange a main camera module, a wide-angle camera module, a macro camera module, and a virtual camera module. The first mounting portion 1242 is configured to arrange the main camera module, the second mounting portion 1244 is configured to arrange the wide-angle camera module, and the other mounting portions 124 are configured to arrange the macro camera module and the virtual camera module.

The sizes of the third mounting portion 1246 and the fourth mounting portion 1248 may be the same or different. Correspondingly, the sizes of the third mounting hole 1266 and the fourth mounting hole 1268 may be the same or different. If the sizes of the third mounting portion 1246 and the fourth mounting portion 1248 are the same, and the sizes of the third mounting hole 1266 and the fourth mounting hole 1268 are also the same, then the size of the camera modules arranged on the third mounting portion 1246 and the fourth mounting portion 1248 may be the same or similar. It is convenient for two functional camera modules to be arranged on the camera bracket 120. For example, the third mounting portion 1246 and the fourth mounting portion 1248 may be configured to arrange two smaller-size camera modules, such as a macro camera module, a virtual camera module, and a black-and-white camera module. The camera bracket 120 may be applicable for more camera modules. The sizes of the third mounting portion 1246 and the fourth mounting portion 1248 of the camera bracket 120 may be standard sizes, so that it is convenient to select a required camera module from a plurality of functional camera modules for installation.

In the description of the present disclosure, it should be understood that terms such as "first", "second", and the like are only used to distinguish similar objects, but without indicating or implying relative importance or implying the number of indicated technical features.

In other implementations, the first mounting portion 1242, the second mounting portion 1244, the third mounting portion 1246, and the fourth mounting portion 1248 have the same size. Correspondingly, the first mounting hole 1262, the second mounting hole 1264, the third mounting hole 1266, and the fourth mounting hole 1268 have the same size. Alternatively, the first mounting portion 1242 has a larger size, and the sizes of the second mounting portion 1244, the third mounting portion 1246, and the fourth mounting portion 1248 have the same size. Correspondingly, the first mounting hole 1262 has a larger size, and the second mounting hole 1264, the third mounting hole 1266, and the fourth mounting hole 1268 have the same size.

It should be noted that, the positions of the four mounting portions 124 can be set as required. For example, as illustrated in FIG. 2, the second mounting portion 1244 is arranged on one side of the first mounting portion 1242, and the third mounting portion 1246 and the fourth mounting portion 1248 are arranged on the other side of the first mounting portion 1242. The first mounting portion 1242 has the largest size. The first mounting portion 1242 is arranged at a middle position, and the second mounting portion 1244 and the third mounting portion 1246 or the fourth mounting portion 1248 are arranged on two sides of the first mounting portion 1242. With such an arrangement, the structure of the camera bracket 120 is more stable, and it is convenient for the main camera module to cooperate with other camera modules by arranging the main camera module in the middle position. For example, the images captured by the main camera module arranged on the first mounting portion 1242 and the wide-angle camera module arranged on the second mounting portion 1244 are used for composition. For another example, the images captured by the main camera module arranged on the first mounting portion 1242 and the virtual camera module arranged on the third mounting portion 1246 are used for composition.

It can be understood that, both of the third mounting portion 1246 and the fourth mounting portion 1248 may be directly and fixedly connected with the first mounting portion 1242, or, the fourth mounting portion 1248 may be fixedly connected with the first mounting portion 1242 through the third mounting portion 1246.

When the four mounting portions 124 are linearly arranged, as illustrated in FIG. 2 and FIG. 4, the fourth mounting portion 1248 is connected to the first mounting portion 1242 through the third mounting portion 1246. When the four mounting portions 124 are arranged in a " 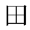 " shape, as illustrated in FIG. 1 and FIG. 3, both the third mounting portion 1246 and the fourth mounting portion 1248 may be directly fixedly connected with the first mounting portion 1242.

In an implementation, the mounting holes of at least two mounting portions of the plurality of mounting portions may communicate with each other. For example, the mounting holes of two mounting portions may communicate with other, and there is no sidewall between the two mounting holes. Or, the mounting holes of three mounting portions may communicate with each other, or, the mounting holes of four mounting portions may communicate with each other. For example, when the plurality of mounting portions are arranged in a row, a plurality of mounting holes of the plurality of mounting portions can all communicate with each other. There is no sidewall among the plurality of mounting holes. With such a structure, the plurality of camera modules arranged in the plurality of mounting holes can be arranged more compactly. A mating structure may be provided between adjacent camera modules to facilitate the cooperation between the camera modules. The fitting structure may be a snap structure or the like. For another example, two of the four mounting portions have the same or similar size, the mounting holes of the two mounting portions may communicate with other, and the two communicated mounting holes of the two mounting portions may be configured to arrange two camera modules having the same or similar size.

In an implementation, any two mounting holes of the plurality of mounting portions are spaced apart from each other. Each mounting portion is provided with a mounting hole. It can also be understood that any two mounting holes are separated by sidewalls. One mounting portion corresponds to one camera module, and each camera module can be arranged well.

In the implementation of the present disclosure, the four mounting portions 124 are fixedly connected. The bracket body portion 122 may be integrally formed, so that the four mounting portions 124 are fixedly connected. For example, the bracket body portion 122 may be integrally formed by injection molding, blow molding, or the like.

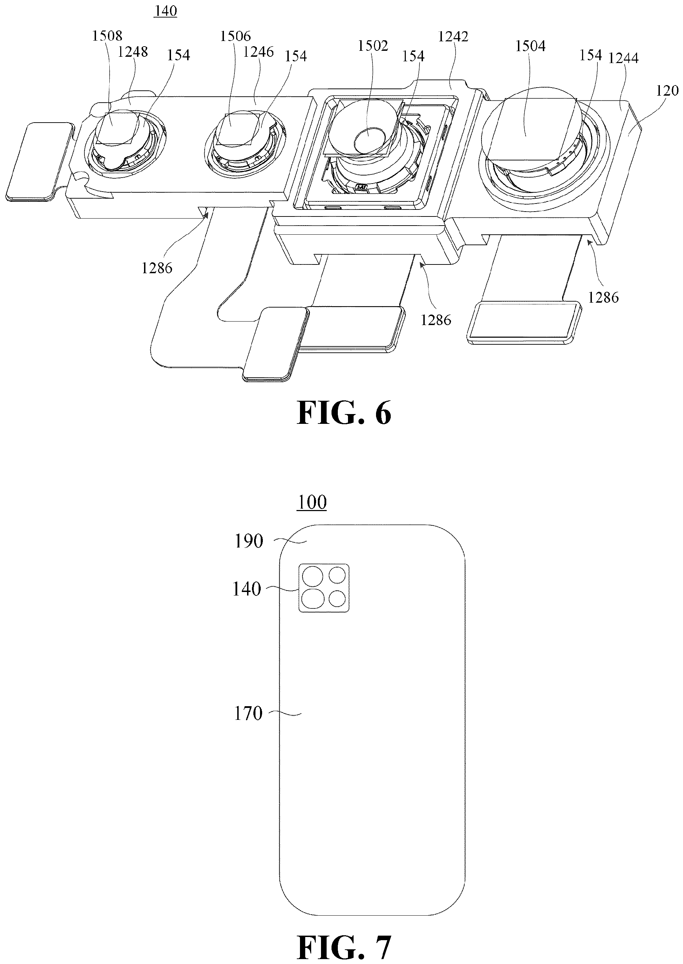

An implementation of the present disclosure further provides a camera assembly. Referring to FIG. 5 and FIG. 6, FIG. 5 is a schematic structural diagram of a camera assembly according to an implementation of the present disclosure, and FIG. 6 is a schematic structural diagram of the camera assembly of FIG. 5 viewed from another perspective according to an implementation of the present disclosure. The camera assembly 140 includes a camera bracket 120 and camera modules 150. The camera bracket 120 may adopt the structure of the camera bracket 120 in any of the above implementations, and details will not be described herein again. The camera modules 150 include at least four camera modules corresponding to the at least four mounting portions 124 of the camera bracket 120, and each of the camera modules 150 is fixedly arranged on a corresponding mounting portion 124.

Referring to FIG. 1, FIG. 3, FIG. 5, and FIG. 6, each of the camera modules 150 includes a substrate 152 and a lens 154 arranged on the substrate 152. One side of each platform portion 1284 connected to the corresponding sidewall 128 may face the substrate 152 of the corresponding camera module 150. In the implementation, the platform portion 1284 includes a first side 12841 and a second side 12842 opposite each other, where the first side 12841 is connected to the corresponding sidewall 128. The first side 12841 of the platform portion 1284 faces the substrate 152 of the corresponding camera module 150. That is, the first side 12841 of the platform portion 1284 is closer to the substrate 152 of the corresponding camera module 150 than the second side 12842. Or, the first side 12841 of the platform portion 1284 is between the second side 12842 of the platform portion 1284 and the substrate 152 of the corresponding camera module 150. For example, the camera bracket 120 has four mounting portions 124 (the first mounting portion 1242, the second mounting portion 1244, the third mounting portion 1246, and the fourth mounting portion 1248). Correspondingly, the camera modules 150 include a first camera module 1502, a second camera module 1504, a third camera module 1506, and a fourth camera module 1508. The first camera module 1502 includes a first substrate, the second camera module 1504 includes a second substrate, the third camera module 1506 includes a third substrate, and the fourth camera module 1508 includes a fourth substrate. The four mounting portions 124 correspondingly include a first platform portion, a second platform portion, a third platform portion, and a fourth platform portion. It can be understood that the first camera module 1502 includes the first substrate and a first lens, and the first mounting portion 1242 on which the first camera module 1502 is arranged includes the first platform portion. The second camera module 1504 includes the second substrate and a second lens, and the second mounting portion 1244 on which the second camera module 1504 is arranged includes the second platform portion. The third camera module 1506 includes the third substrate and a third lens, and the third mounting portion 1246 on which the third camera module 1506 is arranged includes the third platform portion. The fourth camera module 1508 includes the fourth substrate and a fourth lens, and the fourth mounting portion 1248 on which the fourth camera module 1508 is arranged includes the fourth platform portion. The first side 12841 of the first platform portion connected to the corresponding sidewall 128 faces the first substrate, the first side 12841 of the second platform portion connected to the corresponding sidewall 128 faces the second substrate, the first side 12841 of the third platform portion connected to the corresponding sidewall 128 faces the third substrate, and the first side 12841 of the fourth platform portion connected to the corresponding sidewall 128 faces the fourth substrate. The first sides 12841 of the four platform portions 1284 connected to the corresponding sidewalls 128 face the same direction, which is convenient for arranging the four camera modules 150 and fixing the four camera modules 150.

In one implementation, referring to FIG. 1 and FIG. 3, the second side 12842 of each platform portion 1284 is away from the corresponding sidewall 128. That is, only the first side 12841 of each platform portion 1284 is stepped with the corresponding sidewall 128. In other implementations, referring to FIG. 2 and FIG. 4, the second side 12842 of at least one of the platform portions 1284 (such as the second platform portion, the third platform portion, or the fourth platform portion) is away from the corresponding sidewall 128, and the second side 12842 of the other platform portions 1284 (such as the first platform portion) is connected to the corresponding sidewall 128 and faces the lens of the corresponding camera module. That is, the first side 12841 and the second side 12842 of the other platform portions 1284 are opposite to each other and connected to the corresponding sidewall 128, and are both stepped with the corresponding sidewall 128.

It should be noted that, there is a gap between each of the camera modules 150 and the sidewall 128 of the corresponding mounting hole 126. Each camera module 150 may be fixedly connected to the corresponding mounting portion 124 through connecting adhesive (not illustrated in the figures). The connecting adhesive is filled in the gap. The gap is set according to installation requirements, and the size of the gap may be greater than 0.1 mm, 0.2 mm, and so on. For example, the size of the mounting hole may be 0.1 mm greater than that of the corresponding camera module. For example, the mounting hole and the camera module are in rectangular shapes. The length of the mounting hole may be 0.1 mm greater than that of the corresponding camera module, and the width of the mounting hole may be 0.1 mm greater than that of the corresponding camera module. For another example, the mounting hole and the camera module are in circular shapes, and the radius of the mounting hole may be 0.1 mm greater than that of the corresponding camera module.

The size of each mounting hole 126 is slightly larger than that of the corresponding camera module 150, which is convenient for the installation of the camera module 150. After the camera module 150 is arranged in the mounting hole 126, there is a gap between the sidewall 128 of the mounting hole 126 and the camera module 150. The camera module 150 and the sidewall 128 are fixedly connected by filling the gap with the connecting adhesive, so that the plurality of camera modules 150 are fixed to the camera bracket 120.

The connecting adhesive may be filled in the gap or may be provided on the platform portion 1284. The platform portion 1284 is configured to carry the connecting adhesive, which can carry more connecting adhesive, so that the camera module 150 and the sidewall 128 are connected more firmly. It should be noted that, the platform portion 1284 includes the first side 12841 and the second side 12842 opposite each other, where the first side 12841 is connected to the corresponding sidewall 128 and may face the substrate 152 of the camera module 150. The second side 12842 of at least one platform portion 1284 may also be connected to the corresponding sidewall 128 and may face the lens 154 of the corresponding camera module 150. When filling the connecting adhesive, the connecting adhesive is filled toward the first side 12841 and / or the second side 12842 of the platform portion 1284 connected to the sidewall 128. The connecting adhesive may be a fluid glue, and the camera module 150 and the mounting portion 124 are fixedly connected after the connecting adhesive is cured.

If the platform portion 1284 has a smaller area, such as the platform portion 1284 of the first mounting portion 1242 illustrated in FIG. 1, liquid connecting adhesive may be provided on the platform portion 1284, thereby enhancing the connection strength of the camera module 150 and the mounting portion 124. If the platform portion 1284 has a larger area, for example, the platform portion 1284 of the second mounting portion 1244 illustrated in FIG. 1, the connecting adhesive may be provided on the platform portion 1284 first, where the connecting adhesive may be a double-sided adhesive or liquid adhesive, then the camera module 150 is arranged on the platform portion 1284, and the camera module 150 and the mounting portion 124 are fixedly connected by the connecting adhesive. The double-sided adhesive may not be liquid, but may be formed by attaching adhesive layers on both sides of a hard dielectric layer.

Each of the camera modules 150 in the camera assembly 140 includes a connecting portion 156 that is electrically connected to a power supply. The sidewall 128 of each of the mounting portions 124 defines a notch 1286 on its one side through which the connecting portion 156 passes. A plurality of the connecting portions 156 are located on the same side or different sides of the camera assembly 140.

The connecting portion 156 may include a flexible PCB, on which wiring is provided. The connecting portion 156 may be electrically connected to the power supply for supplying power to the camera module 150. The connecting portion 156 may also be electrically connect to a motherboard of the terminal 100. A main chip of the motherboard is able to control the camera module 150 through the connecting portion 156, and the connecting portion 156 may also transmit signals obtained by the camera module 150 to the motherboard to realize photographing and imaging. The notch 1286 is provided on one side of the sidewall 128 of the mounting portion 124 to allow the connecting portion 156 to pass through, which can not only save space, but also fix and protect the connecting portion 156. The plurality of connecting portions 156 can be located on the same side of the camera bracket 120, which is convenient for arranging the wiring. For example, the plurality of mounting portions 124 may be linearly arranged, and the plurality of connecting portions 156 of the plurality of camera modules 150 may be located on the same side of the camera assembly 140. Of course, the plurality of connecting portions 156 may also be located on different sides of the camera assembly 140. For example, the plurality of mounting portions 124 may be linearly arranged, and among the plurality of camera modules 150, the connecting portion 156 of the camera module 150 on two sides and the connecting portion 156 of the camera module 150 in the middle may be located on different sides of the camera assembly 140. For another example, the plurality of mounting portions 124 may be arranged in a " 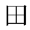 " shape or in a similar matrix manner, and the connecting portions 156 of the camera modules 150 in two rows or two columns may be oppositely arranged on two sides of the camera assembly 140, respectively.

It should be noted that the accompanying figures illustrate implementations in which the camera modules are arranged in rows or columns. The camera modules can also be arranged in a "EET shape or a similar matrix manner. That is, the camera modules can be correspondingly arranged in the plurality of mounting portions arranged in a matrix manner.

In some implementations, the structures illustrated in FIGS. 1 and 2 may be combined or replaced. For example, the structure of the first mounting portion 1242 illustrated in FIG. 2 may be applied to the first mounting portion 1242 illustrated in FIG. 1. That is, the specific structure of the first mounting portion 1242 illustrated in FIG. 1 may be replaced with the specific structure of the mounting portion 1242 illustrated in FIG. 2. For example, the structure of the platform portion 1284 of the first mounting portion 1242 illustrated in FIG. 1 may adopt the structure of the platform portion 1284 of the first mounting portion 1242 illustrated in FIG. 2.

An implementation of the present disclosure further provides a terminal which includes the camera assembly described above.

Referring to FIG. 7, FIG. 7 is a schematic diagram of a first structure of a terminal according to an implementation of the present disclosure. The terminal 100 includes a housing 190 and a camera assembly 140. The camera assembly 140 is arranged in the housing 190. The camera assembly 140 may adopt the structure of the camera assembly 140 in any of the above implementations, and details are not described herein again.

Referring to FIG. 1, FIG. 2, and FIG. 7, the camera bracket 120 is provided with a first positioning portion 127, and the housing 190 is provided with a second positioning portion (not illustrated) corresponding to the first positioning portion 127. The first positioning portion 127 and the second positioning portion are cooperatively connected.

The camera bracket 120 and the housing 190 are positioned through the first positioning portion 127 and the second positioning portion, which is convenient for arranging the camera bracket 120 on the housing 190. The housing 190 may be a rear cover or a middle frame of the terminal 100. That is, the camera bracket 120 may be arranged on the rear cover or the middle frame of the terminal 100.

The first positioning portion 127 is a fixing groove, the second positioning portion is a protruding portion, and the protruding portion is snapped into the fixing groove. The first positioning portion 127 and the second positioning portion can be configured not only for positioning but also for fixing. The first positioning portion 127 and the second positioning portion are fixed by a snap fit. There may be a gap between the fixing groove and the protruding portion, or, the fixing groove and the protruding portion may be fixed by interference fit. In some other implementations, the first positioning portion 127 is a protruding portion, the second positioning portion is a fixing groove, and the protruding portion is snapped into the fixing groove.

The at least four camera modules 150 and the camera bracket 120 can be assembled as a whole. In the entire structural design of the terminal 100, only the position limits of the camera bracket 120 and the whole machine needs to be considered, which optimizes the difficulty of the whole structural design. The plurality of camera modules 150 are arranged together, instead of being limited by internal structures of the terminal 100. The distance between the plurality of camera modules 150 can be set very small, which saves the layout space of the whole machine.

The camera assembly 140 may be used as a rear camera or a front camera of the terminal 100.

In the implementation of the present disclosure, the camera assembly 150 may further include a flash which may be arranged beside the main camera module, or may be arranged between two camera modules, or may be arranged on one side of all camera modules. The camera bracket 120 can be additionally provided with a flash mounting portion that is configured to arrange the flash, which is convenient for positioning of the flash, and the cooperation between the camera module and the flash.

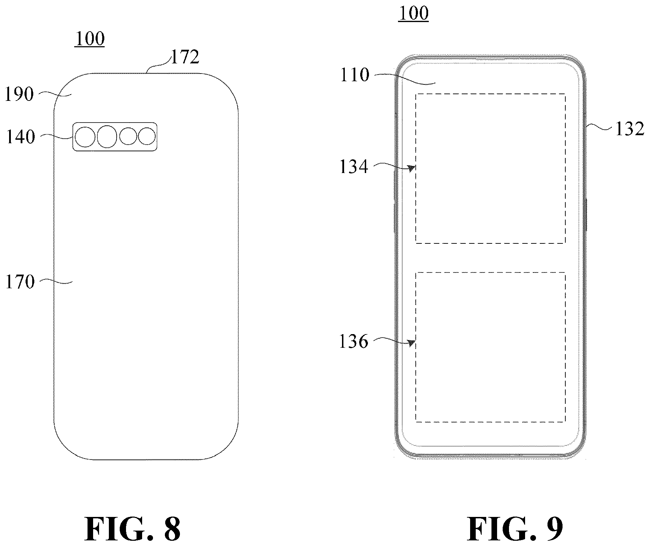

It should be noted that the accompanying figures illustrate implementations in which the camera modules 150 are in a " 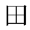 " shape. The camera modules 150 can also be arranged in rows or columns. That is, the camera modules 150 may be correspondingly arranged in the plurality of mounting portions 124 arranged in rows or columns. Referring to FIG. 8, FIG. 8 is a schematic diagram of a second structure of the terminal 100 according to an implementation of the present disclosure. The camera modules 140 illustrated in the figure can be arranged in a row, which can also be understood that the camera modules 140 is parallel to a top edge 172 of the terminal 100. In other implementations, the camera modules 140 may be arranged in a row, which can also be understood that the camera modules 140 is perpendicular to the top edge 172 of the terminal 100.

FIG. 9 is a schematic diagram of a third structure of the terminal according to an implementation of the present disclosure. Referring to FIG. 7 and FIG. 9, the terminal 100 may further include a display screen 110, a middle frame 132, a circuit board 134, and a battery 136.

The display screen 110 may be arranged on the middle frame 132 and connected to a back cover 170 through the middle frame 132. The display screen 110 may form a display surface of the terminal 100 for displaying information such as images and texts. The display screen 110 may include a liquid crystal display (LCD) or an organic light-emitting diode display (OLED).

It can be understood that, a cover plate may be further provided on the display screen 110. The cover plate covers the display screen 110 to protect the display screen 110 and prevent the display screen 110 from being scratched or damaged by water. The cover plate may be a transparent glass cover, so that the user can observe the information displayed on the display screen 110 through the cover plate. For example, the cover plate may be a glass cover made of sapphire.

The middle frame 132 may have a thin plate-like or sheet-like structure, or may have a hollow frame structure. The middle frame 132 is configured to provide support for the electronic components or functional components arranged in the terminal 100, so as to arrange the electronic components and the functional components in the terminal 100 together.

The middle frame 132 and the back cover 170 may cooperate to form the housing of the terminal 100 and are configured to receive or arrange the electronic components, the functional components, and the like of the terminal 100. In addition, the functional components of the terminal 100 such as a camera component, a receiver, a circuit board, a battery, and the like can be arranged on the middle frame 132 or the circuit board 134 for fixing. It can be understood that the material of the middle frame 132 may include metal or plastic.

The circuit board 134 may be arranged on the middle frame 132. The circuit board 134 may be a motherboard of the terminal 100. One or more functional components such as the microphone, speaker, receiver, headphone interface, camera assembly, acceleration sensor, gyroscope, processor, and the like may be integrated on the circuit board 134. Meanwhile, the display screen 110 may be electrically connected to the circuit board 134 to control the display of the display screen 110 by the processor arranged on the circuit board 134.

The battery 136 may be arranged on the middle frame 132. At the same time, the battery 136 is electrically connected to the circuit board 134 to realize that the battery 136 supplies power to the terminal 100. The circuit board 134 may be provided with a power management circuit. The power management circuit is configured to distribute voltage provided by the battery 136 to various electronic components in the terminal 100.

The back cover 170 may be integrally formed. In the forming process of the rear cover 170, a structure such as a rear lens hole 172 and the like may be formed on the rear cover 170, and the lens hole 172 faces the camera assembly. The back cover 170 may be fixedly connected to the middle frame 132 through double-sided adhesive.

The camera bracket, the camera assembly and the terminal provided in the implementations of the present disclosure are described in detail above. Specific examples are used herein to explain the principle and implementation of the present disclosure. The description of the above implementations are only used to help understand the present disclosure. At the same time, for those skilled in the art, according to the idea of the present disclosure, there will be changes in the specific implementation and application scope. In summary, the content of this description should not be construed as a limitation on the present disclosure.

## Claims

1. A camera bracket (120) comprising:
a bracket body portion (122) comprising at least four mounting portions (124), wherein each of the mounting portions (124) is provided with a mounting hole (126), and each of the mounting portions (124) comprises a sidewall (128) defining the mounting hole (126), wherein at least one of the mounting portions (124) is provided with a platform portion (1284) on its sidewall (128), wherein the platform portion (1284) vertically extends from its corresponding sidewall (128), and is stepped with its corresponding sidewall (128).

2. The camera bracket (120) of claim 1, wherein the at least four mounting portions (124) are linearly arranged, or the at least four mounting portions (124) comprise four mounting portions arranged in a matrix.

3. The camera bracket (120) of claim 1 or 2, wherein the at least four mounting portions (124) comprise a first mounting portion (1242) provided with a first mounting hole (1262), wherein a size of the first mounting portion (1242) is larger than that of the other mounting portions (124), and a size of the first mounting hole (1262) of the first mounting portion (1242) is larger than that of the mounting holes (126) of the other mounting portions (124), wherein the first mounting portion (1242) is configured to arrange a main camera module.

4. The camera bracket (120) of claim 3, wherein the at least four mounting portions (124) further comprise a second mounting portion (1244), a third mounting portion (1246), and a fourth mounting portion (1248); wherein the second mounting portion (1242) is provided with a second mounting hole (1264), the third mounting portion (1244) is provided with a third mounting hole (1266), and the fourth mounting portion (1248) is provided with a fourth mounting hole (1268); wherein a size of the second mounting portion (1244) is larger than that of the third mounting portion (1246) and the fourth mounting portion (1248), a size of the second mounting hole (1264) is larger than the size of the third mounting hole (1266) and the fourth mounting hole (1268).

5. The camera bracket (120) of claim 4, wherein the third mounting portion (1246) and the fourth mounting portion (1248) have the same size, and the third mounting hole (1266) and the fourth mounting hole (1268) have the same size.

6. The camera bracket (120) of claim 4, wherein the second mounting portion (1244) is arranged on one side of the first mounting portion (1242), and the third mounting portion (1246) and the fourth mounting portion (1248) are arranged on the other side of the first mounting portion (1242).

7. The camera bracket (120) of claim 6, wherein the third mounting portion (1246) and the fourth mounting portion (1248) are directly fixedly connected to the first mounting portion (1242); or the fourth mounting portion (1248) is fixedly connected to the first mounting portion (1242) through the third mounting portion (1246).

8. The camera bracket (120) of claim 1, wherein the mounting holes (126) of at least two mounting portions (124) communicate with each other, or any two of the mounting holes (126) are spaced apart from each other.

9. The camera bracket (120) of claim 1, wherein the bracket body portion (122) is integrally formed.

10. A camera assembly (140) comprising:
a camera bracket (120) of any one of claims 1 to 9; and
at least four camera modules (150) corresponding to the at least four mounting portions (124) of the camera bracket (120), wherein each of the camera modules (150) is fixedly arranged on a corresponding mounting portion.

11. The camera assembly (140) of claim 10, wherein each of the camera modules (150) comprises a substrate (152) and a lens (154) arranged on the substrate (152);
wherein each of the platform portions (1284) comprises a first side (12841) and a second side (12842) opposite each other, wherein the first side (12841) is connected to the corresponding sidewall (128) and faces the substrate (152) of the corresponding camera module;
wherein the second side (12842) of each platform portion (1284) is away from the corresponding sidewall (128); or, the second side (12842) of at least one of the platform portions (1284) is away from the corresponding sidewall (128), and the second side (12842) of the other platform portions (1284) is connected to the corresponding sidewall (128) and faces the lens (154) of the corresponding camera module.

12. The camera assembly (140) of claim 11, wherein a gap exists between each of the camera modules (150) and the sidewall (128) of the corresponding mounting hole (126), and each camera module is fixedly connected to the corresponding mounting portion through connecting adhesive, wherein the connecting adhesive is at least one of: filled in the gap or provided on the platform portion (1284).

13. The camera assembly (140) of claim 10, wherein each of the camera modules (150) comprises a connecting portion (156) that is electrically connected to a power supply;
wherein the sidewall (128) of each of the mounting portions (124) defines a notch (1286) on its one side through which the connecting portion (156) passes, wherein a plurality of the connecting portions (156) are located on the same side or different sides of the camera assembly (140).

14. A terminal (100) comprising a housing (190) and a camera assembly (140) of any one of claims 10 to 13, and the camera assembly (140) is arranged in the housing (190).

15. The terminal (100) of claim 14, wherein the camera bracket (120) is provided with a first positioning portion (127), and the housing (190) is provided with a second positioning portion corresponding to the first positioning portion (127), wherein the first positioning portion (127) and the second positioning portion are cooperatively connected;
wherein the first positioning portion (127) is a fixing groove, the second positioning portion is a protruding portion, and the protruding portion is snapped into the fixing groove; or
the first positioning portion (127) is a protruding portion, the second positioning portion is a fixing groove, and the protruding portion is snapped into the fixing groove.
